# EUROPEAN PATENT APPLICATION

(11) **EP 4 546 759 A1**
(43) Date of publication of application: **30.04.2025**
(21) Application number: 24205021.9
(22) Date of filing: 07.10.2024
(51) Int. Cl.: H04L 67/562, G06F 9/50, H04L 67/51, H04L 67/288, G06V 10/82, G06V 20/52

(54) **LOCAL AREA NETWORK SYSTEM WITH MACHINE LEARNING-BASED TASK OFFLOAD FEATURE**

(30) Priority: 27.10.2023 US 202318496459
(71) Applicant: Roku, Inc., San Jose, CA 95110 (US)
(72) Inventor: MAKER, Frank, Livermore (US); HETHERMAN, Brian James, Medford (US); MCINTOSH, Ian M., San Francisco (US)
(74) Representative: Aldridge, Henry Alexander

(57) **Abstract**

In one aspect, disclosed in a method for use in connection with a local area network (LAN) system comprising a group of multiple devices that includes a first device and a separate set of devices. The method includes: the first device determining that a machine learning (ML)-based task is to be performed; the first device broadcasting to the separate set of devices, a ML-based task request for the ML-based task, (i) wherein the separate set of devices are configured to perform an arbitration process to select a second device, and (ii) wherein the second device is configured to perform the ML-based task in accordance with the ML-based task request, thereby generating ML-based task output, and to transmit the generated ML-based task output to the first device; and the first device receiving the generated output from the second device and using the received output to facilitate performing one or more operations.

## Description

### USAGE AND TERMINOLOGY

In this disclosure, unless otherwise specified and/or unless the particular context clearly dictates otherwise, the terms "a" or "an" mean at least one, and the term "the" means the at least one.

### SUMMARY

In one aspect, an example method is disclosed. The method is for use in connection with a local area network (LAN) system comprising a communication network and a group of multiple devices connected to the communication network, wherein the group of multiple devices includes a first device and a separate set of devices, the method comprising: (i) the first device determining that a machine learning (ML)-based task is to be performed; (ii) the first device broadcasting to the separate set of devices, a ML-based task request for the ML-based task, (a) wherein the separate set of devices are configured to perform an arbitration process to select a second device from among the separate set of devices based at least on the second device having favorable computing resource availability as compared to respective computing resource availability of any other devices of the separate set of devices, and (b) wherein the second device is configured to perform the ML-based task in accordance with the ML-based task request, thereby generating ML-based task output, and to transmit the generated ML-based task output to the first device; and (iii) the first device receiving the generated output from the second device and using the received output to facilitate performing one or more operations.

In another aspect, another example computing system is disclosed. The computing system is configured to perform a set of acts for use in connection with a LAN system comprising a communication network and a group of multiple devices connected to the communication network, wherein the group of multiple devices includes a first device and a separate set of devices, the set of acts comprising the acts of the method referenced one paragraph above.

In another aspect, another example non-transitory computer-readable medium is disclosed. The computer-readable medium has stored thereon program instructions that upon execution by a computing system, cause performance of a set of acts for use in connection with a LAN system comprising a communication network and a group of multiple devices connected to the communication network, wherein the group of multiple devices includes a first device and a separate set of devices, the set of acts comprising the acts of the method referenced two paragraphs above.

In another aspect, another example method is disclosed. The method is for use in connection with a LAN system comprising a communication network and a group of multiple devices connected to the communication network, wherein the group of multiple devices includes a first device and a separate set of devices, the method comprising: (i) the first device determining that a ML-based task is to be performed; (ii) the first device determining computing resource availability for each device of the separate set of devices; (iii) the first device using at least the determined ML-based task and the determined computing resource availability for each device of the separate set of devices as a basis to select a second device from among the separate set of devices based at least on the second device having favorable computing resource availability as compared to respective computing resource availability of any other devices of the separate set of devices; (iv) the first device transmitting to the second device, a ML-based task request for the ML-based task, wherein the second device is configured to perform the ML-based task in accordance with the ML-based task request, thereby generating ML-based task output, and to transmit the generated ML-based task output to the first device; and (v) the first device receiving the generated output from the second device and using the received output to facilitate performing one or more operations.

In another aspect, another example computing system is disclosed. The computing system is configured to perform a set of acts for use in connection with a LAN system comprising a communication network and a group of multiple devices connected to the communication network, wherein the group of multiple devices includes a first device and a separate set of devices, the set of acts comprising the acts of the method referenced one paragraph above.

In another aspect, another example non-transitory computer-readable medium is disclosed. The computer-readable medium has stored thereon program instructions that upon execution by a computing system, cause performance of a set of acts for use in connection with a LAN system comprising a communication network and a group of multiple devices connected to the communication network, wherein the group of multiple devices includes a first device and a separate set of devices, the set of acts comprising the acts of the method referenced two paragraphs above.

In another aspect, another example method is disclosed. The method is for use in connection with a LAN system comprising a communication network, a controller connected to the communication network, and a group of multiple devices connected to the communication network, wherein the group of multiple devices includes a first device and a separate set of devices, the method comprising: (i) the controller determining that a ML-based task is to be performed; (ii) the controller determining computing resource availability for each device of the separate set of devices; (iii) the controller using at least the determined ML-based task and the determined computing resource availability for each device of the separate set of devices as a basis to select a second device from among the separate set of devices based at least on the second device having favorable computing resource availability as compared to respective computing resource availability of any other devices of the separate set of devices; and (iv) the controller transmitting to the second device, a ML-based task request for the ML-based task, wherein the second device is configured to perform the ML-based task in accordance with the ML-based task request, thereby generating ML-based task output, and to transmit the generated ML-based task output to the first device, and wherein the first device is configured to receive the generated output from the second device and to use the received output to facilitate performing one or more operations.

In another aspect, another example computing system is disclosed. The computing system is configured to perform a set of acts for use in connection with a LAN system comprising a communication network, a controller connected to the communication network, and a group of multiple devices connected to the communication network, wherein the group of multiple devices includes a first device and a separate set of devices, the set of acts comprising the acts of the method referenced one paragraph above.

In another aspect, another example non-transitory computer-readable medium is disclosed. The computing system is configured to perform a set of acts for use in connection with a LAN system comprising a communication network, a controller connected to the communication network, and a group of multiple devices connected to the communication network, wherein the group of multiple devices includes a first device and a separate set of devices, the set of acts comprising the acts of the method referenced two paragraphs above.

### BRIEF DESCRIPTION OF THE DRAWINGS

Figure 1 is a simplified block diagram illustrating an example arrangement in which disclosed principles could be implemented.
Figure 2 is a simplified block diagram illustrating example components of an example device.
Figure 3 is a simplified block diagram illustrating another example arrangement in which disclosed principles could be implemented.
Figure 4 is a flow chart illustrating an example method that could be carried out in accordance with the disclosure.
Figure 5 is a flow chart illustrating another example method that could be carried out in accordance with the disclosure.
Figure 6 is a flow chart illustrating another example method that could be carried out in accordance with the disclosure.

### DETAILED DESCRIPTION

### I. Overview

Modern customer premises, such as homes, hotels, or offices, are increasingly equipped with many devices that are configured to engage in digital communications. These devices may range from traditional internet-connected equipment such as personal computers, telephone systems, security systems, cameras, gaming systems, televisions, over-the-top (OTT) streaming media players, and network devices, to newer equipment including "smart home" devices such as connected appliances, utilities, lights, switches, power outlets, and speakers, as well as wearable devices such as watches and/or health monitors, among countless other examples.

A given one of these devices can include one or more computing resources that the device can use in connection with performing various operations. For example, in the case of a camera mounted near a front door of a home, the camera can include a processor and a memory, which the camera can use, perhaps in connection with other hardware and/or software, to facilitate capturing video, analyzing the captured video for various properties (e.g., to detect the presence of a person approaching the front door), and generating an alert based on that analysis (e.g., by way of causing a speaker in the home to output a doorbell chime and/or by sending a message to a mobile device).

In some instances, in connection with such a device performing an operation, the device may perform one or more machine learning (ML)-based tasks. For instance, returning to the camera example, to facilitate the operation of the camera analyzing the captured video, the camera may provide video data (e.g., in the form of raw video data or a feature vector derived from the raw video data) to a trained ML-based image recognition model (e.g., a deep neural network (DNN) model), which can use the video data as input to generate output indicating the presence of a person in the video (e.g., in the form of data indicating a temporal and/or regional portion of the video where a person's presence was detected).

In some cases, ML-based tasks can be especially resource intensive and such device can sometimes have limited computing resources. For these and/or other reasons, in some instances, it may be desirable for these devices to offload such ML-based tasks to one or more other devices. One approach to doing this could involve a cloud-computing arrangement in which a given device offloads a ML-based task to a remotely located server. For example, in the front door camera example, the camera could communicate with an image processing server remotely located in a server farm or somewhere remote from the home, such that the camera can locally capture and generate video data, and then transmit that generated video data to the remote image processing server, which can perform the ML-based task of using the video data as input to generate output indicating the presence of a person in the video. The remote image processing server can then transmit this output to the camera, which the camera can use to facilitate performing one or more other operations, such as sending an instruction to a sound speaker in the home, to trigger to sound speaker to sound an alert, or causing a message to be sent to a mobile device. In this way, the camera could offload the ML-based task to a remote device outside of the home, while itself still being able to carry out certain operations.

However, for various reasons, it may be undesirable to offload tasks to a remote device. Among other things, offloading tasks may involve transmitting associated task-related data to the remote device, which can increase certain security and/or privacy-related risks. For example, in the case of the camera, it might be undesirable from a security and/or privacy perspective to transmit video data to a remote device. In addition, depending on the communication path to the remote device, transmitting data to and from the remote device might introduce undesirable transmission latency. Referring again the front door camera example, this could result in an undesirable delay between a time point at which a person approaches the front door and a time point at which the camera perform a desired operation. In addition, it can sometimes be expensive and/or labor intensive to configure and maintain a remote device. As such, for these and possibly other reasons, it may not be desirable to offload such ML-based tasks to a remove device.

In various examples, the disclosed techniques address these and possibly other issues by providing a local area network (LAN) system configured in a manner that allows a device on the LAN to intelligently and efficiently offload one or more ML-based tasks to one or more other devices on the LAN.

In line with this approach, according to one aspect, the disclosure provides a method for use for use in connection with a LAN system comprising a communication network and a group of multiple devices connected to the communication network, where the group of multiple devices includes a first device and a separate set of devices. The first device can determine that a ML-based task is to be performed and can then broadcast to the separate set of devices, a ML-based task request for the ML-based task. The separate set of devices can then perform an arbitration process to select a second device from among the separate set of devices based at least on the selected second device having favorable computing resource availability as compared to respective computing resource availability of any other devices of the set of devices. The selected second device can then perform the ML-based task in accordance with the ML-based task request, thereby generating ML-based task output, and can transmit the generated ML-based task output to the first device. The first device can then receive the generated output from the second device and can use the received output to facilitate performing one or more operations.

Such an example LAN system could be implemented in a variety of different scenarios. For example, in one scenario, the group of multiple devices can be a group smart home devices located in or around a user's home. Within this group of smart home devices, the first device can be a front door camera and the separate set of devices can be a set of three devices, namely a television, a set-top box, and a sound speaker. In connection with periodically checking whether to generate an alert indicating the presence of a person at the front door, the camera can determine that there is a need to perform the ML-based task of using video data and a trained ML-based image recognition model to generate output indicating the presence of a person in the video. However, rather than performing this ML-task itself, the camera can instead broadcast a corresponding task request to the television, the set-top box, and the sound speaker. Those devices can then perform an arbitration process to select a device from among them. For instance, the devices can perform an arbitration process to select the television based on a determination that the television has favorable computing resource availability (e.g., more available processing power and/or memory) as compared to the computing resource availability of the set-top box and the sound speaker. After being selected, the television can then perform the ML-based task, namely the task of using video data and a trained ML-based image recognition model to generate output indicating the presence of a person in the video, which the television can transmit to the camera. The camera can then receive this generated output from the television and can use the received output to facilitate performing one or more operations, such as sending an instruction to a sound speaker in the home, to trigger to sound speaker to sound an alert, or causing an alert message to be sent to a mobile phone, for example. Among other things, this can allow the camera to offload the ML-task, while still itself performing certain operations.

The disclosure also provides for other approaches to intelligently and efficiently offloading one or more ML-based tasks to one or more other devices on the LAN. For example, in other aspect, rather than the second set of devices performing an arbitration process, the first device can determine computing resource availability for each device of the separate set of devices, and can then use at least the determined ML-based task and the determined computing resource availability for each device of the separate set of devices as a basis to select the second device from among the separate set of devices. The first device can then transmit to the second device, a ML-based task request for the ML-based task, such that the second device can perform the ML-based task and provide output to the first device, which it can use in connection with performing certain operations. And in yet another aspect, a controller connected to the LAN can aid in selecting the second device and can facilitate perform performing certain operations, such as those discussed above.

These as well as many other aspects, examples, advantages, and alternatives will become apparent from reading the following detailed description with reference where appropriate to the accompanying drawings. Further, it should be understood that the implementations described in this section and in the following description and drawings are intended as examples only and that numerous variations could be possible.

Example implementations will be described in the context of example customer premises such as a home and with certain example devices. It will be understood, however, that the disclosed principles could apply as well with respect to other customer premises, including without limitation as any facility where people might reside, work, visit, or otherwise be present, and with respect to many different types of devices.

It will also be understood that the arrangements and processes described could take various other forms. For instance, elements and operations could be re-ordered, distributed, replicated, combined, omitted, added, or otherwise modified. In addition, elements described as functional entities could be implemented as discrete or distributed components or in conjunction with other components/modules, and in any suitable combination and location. Further, various operations described as being carried out by one or more entities could be implemented by and/or on behalf of those entities, through hardware, firmware, and/or software, such as by one or more processing units executing program instructions stored in memory, among other possibilities.

### II. Example Architecture

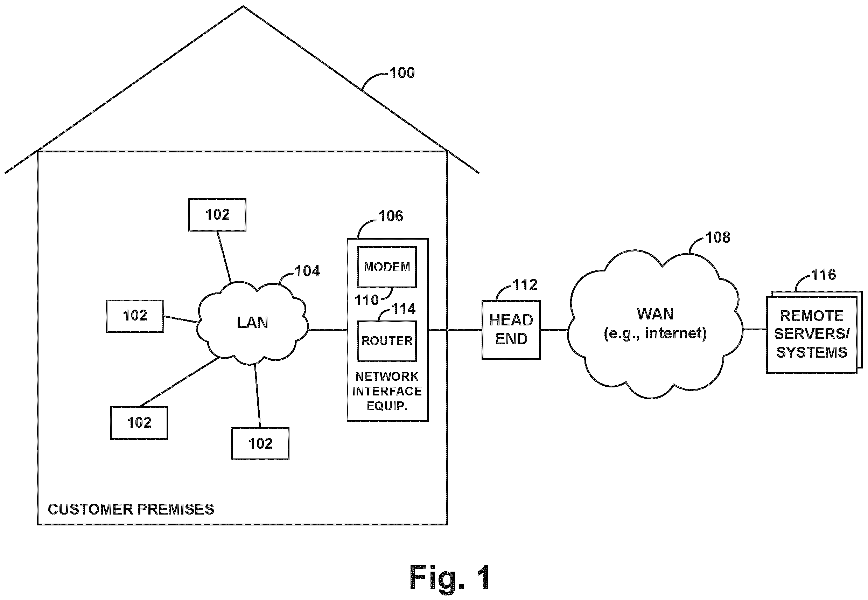

Referring to the drawings, as noted above, Figure 1 is a simplified block diagram illustrating an example arrangement in which various disclosed principles could be implemented. As shown in Figure 1, the example arrangement includes, at example customer premises 100, a collection of multiple devices 102 that could be configured to operate as described herein. In a scenario where the customer premises 100 comprises a house or another structure, one or more of these devices 102 could be located physically within that structure, and/or one or more of the devices 102 could be located outside of the structure, such as in an adjoining or nearby area for instance.

To facilitate operations such as those noted above, various ones of the devices 102 of the collection could be configured to communicate with each other. This communication could occur in any of a variety of ways, through wireless and/or wired physical connections, and through direct peer-to-peer connections and/or network connections.

Without limitation, for instance, Figure 1 shows some of the devices 102 sitting as nodes on a local area network (LAN) 104. LAN 104 could be a centralized network having a router or the like to manage device connections and routing of data, or LAN 104 could be a decentralized network (e.g., a wireless ad-hoc network), which may be self-configuring as devices enter or leave the network, and in which routing of data may occur more dynamically based on network connections and routing algorithms. Alternatively or additionally, as further shown, some of the devices 102 may have direct rather than networked connections with each other.

To support this or other such inter-device communication, each device 102 of the collection could include one or more communication modules and associated communication logic. For instance, each device 102 could include a wireless communication module, such as a WiFi, BLUETOOTH, or ZIGBEE module, and/or a wired communication module such as an Ethernet or Powerline network adapter, and could include a processor programmed with an associated communication stack and/or other logic that governs its communications.

Through manual or automated processes using these modules, the devices 102 may acquire connectivity that would allow them to then engage in direct or indirect communication with each other. For instance, the devices 102 may broadcast signals advertising their presence and may likewise discover presence of other devices 102 and/or network infrastructure, and the devices 102 may engage in control signaling to establish direct pairings with other devices 102 and/or to obtain network address assignments that allow them to engage in network communication with each other. Further, some manual setup may be involved in establishing these or other device connections.

Figure 1 also illustrates the example customer premises 100 including network interface equipment 106 that provides the customer premises 100 with a connection that may enable one or more of the devices 102 to communicate on a wide area network (WAN) 108 such as the internet, with one or more remote servers/systems 116. In an example implementation, the network interface equipment 106 could include a cable, satellite, cellular, or other WAN modem 110 configured to connect with an associated head end (e.g., cable or satellite head end or cellular core network) 112 that provides WAN connectivity, and could further include a router 114 that may manage communications between various devices 102 and enable various devices 102 to communicate on the WAN 108.

With this example arrangement, when the WAN modem 110 is initially powered on, the modem 110 may register its presence with the head end 112, and the head end 112 may assign to the modem 110 a globally-routable Internet Protocol (IP) address for use to engage in communications on the WAN 108, or the modem 110 may have a statically-assigned globally-routable IP address. Further, as a device 102 initially powers on, the device 102 may register its presence with the router 114, and the router 114 may assign to the device a locally-routable IP address for use to engage in communication on the LAN 104, or the device may have a statically-assigned locally-routable IP address. The device 102 may then engage in WAN communications through the router 114, modem 110, and WAN connection, with the router performing standard network address translation between the device's local IP address and the modem's global IP address.

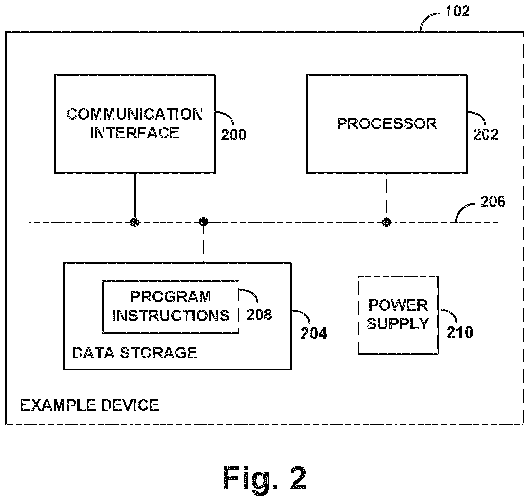

Figure 2 is a simplified block diagram illustrating components of an example device 102. As shown in Figure 2, the example device 102 includes a communication interface 200, a processor 202, data storage 204, all of which may be communicatively linked together by a system bus, network, or other connection mechanism 206 and/or integrated together in various ways. Further, the example device 102 includes a power supply 210, such as a direct or alternating current input or a battery, which could supply power to drive various other components of the device 102. Depending on its type, the device may include various other components.

The communication interface 200 could include one or more communication modules such as wireless and/or wired interfaces and associated logic to facilitate communication with other devices in the collection and, if applicable, to facilitate communication on the WAN 108, in accordance with any of the protocols noted above, among other possibilities. For instance, the communication interface 200 could include one or more wireless communication modules with one or more associated antennas, and/or one or more wired Ethernet modules.

The processor 202 could comprise one or more general purpose processors (e.g., microprocessors) and/or one or more special purpose processors (e.g., application specific integrated circuits). Further, the data storage 204 could comprise one or more non-transitory storage/memory components, such as optical, flash, magnetic, RAM, ROM, or other storage, possibly integrated in whole or in part with the processor 202. As shown, the data storage could hold or be configured to hold program instructions 208 and/or other data. The program instructions 208 could define or constitute controller code, which could be executable or interpretable by the processor 202 to cause the device 102 to carry out various device operations described here. And the other data could include data useable by the device 102 to facilitate carrying out various operations. For instance, the other data could include data associated with one or more ML-based tasks, and/or data associated with the device's computing resources, among other possibilities.

In some examples, one more of these components or portions thereof may be physically or logically grouped together in the form of a special purpose module, which may be specially suited to perform certain types of tasks or operations. For example, the device 102 may include a ML-module (sometimes referred to by another name, such as a machine learning accelerator, a microprocessor unit (MPU), a neural net processor unit, or a deep learning processor unit), which may be specially suited to perform one or more ML-based tasks.

The devices 102 of the collection may be of various types, including but not limited to sensors, controlling devices, controlled devices, and/or other devices that may range from traditional internet-connected equipment such as personal computers, telephone systems, security systems, cameras, gaming systems, televisions, over-the-top (OTT) streaming media players, and network devices, to newer equipment including "smart home" devices such as connected appliances, utilities, lights, switches, power outlets, and speakers, as well as wearable devices such as watches and/or health monitors, among countless other examples. Further, some devices 102 may be of multiple types.

Sensors could function to sense state. As noted above, for instance, sensors could include devices for sensing motion, vibration, water, smoke, heat, pressure, wind, or the like. Sensors could include known components that enable them to threshold state conditions and to trigger responsive action. For example, a sensor could be configured to sense when the level of motion, vibration, water, smoke, or other state in its environment reaches a predefined threshold level, and to responsively output a signal to a paired controlling device, to trigger associated action by the controlling device.

Controlling devices could function to control other devices and/or to take other control action. Controlling devices could include human-interface components, for receiving user input to trigger control action. For instance, a controlling device could include one or more switches, buttons, knobs, touch screens, microphones, or other components. Some such components could be configured to receive primitive user input such as the tapping or pressing of a button, the toggling of a switch, or the sliding of a slider, among other possibilities. Other such components could be configured to receive more complex user input, such voice input, parameter specifications, or the like. Further, controlling devices could be configured to receive input from sensors, indicating sensed state, and/or to detect or otherwise learn of context. And controlling devices could be configured to respond to such input, context, or the like, by engaging in control operations, such as outputting signaling to one or more controlled devices to change operational state or otherwise trigger controlled-device action.

Controlled devices could then function to be controlled by controlling devices. As noted above, examples of controlled devices could include power outlets, lightbulbs, fans, speakers, or the like. Controlled devices could be configured to receive control signals from controlling devices and to respond to the control signals by changing their state. For instance, a power outlet may be configured to receive a control signal from a switch and to respond to the control signal by toggling between outputting power or not. As another example, a lightbulb may be configured to receive a control signal from a switch and to respond to the control signal by toggling between on and off state, changing the brightness or color of its emitted light, and/or taking one or more other actions indicated by the control signal, among other possibilities.

OTT devices could function to facilitate OTT media services. Without limitation, an OTT device could be an OTT streaming media player, which could be integrated or connected with a display such as a television and could interwork with various servers operated by an OTT provider (e.g., a virtual multichannel video programming distributor (virtual MVPD)), to facilitate receiving and playing of streaming media content. An OTT device may also be configured to receive from the OTT provider and to present on the display a graphical user interface (GLTI) defining a menu of available streaming media channels, available content items, settings, and other options. Further, the OTT device may be configured to allow a user to navigate through the GUI (e.g., using a remote control) and to provide input that the OTT device could convey to the OTT provider to trigger actions such as controlling selection and streaming of media content.

Each of these and/or other devices 102 at the customer premises 100 may have one or more identifiers that may uniquely identify the device among the collection of devices at the customer premises, and that may facilitate communication among the devices. For instance, each device could have a permanent or semi-permanent hardware address, such as a Media Access Control (MAC) address or other identifier, and the devices may communicate with each other by addressing communications to their respective MAC addresses. Further or alternatively, each device may have a network address, such as a local IP address as noted above, and the devices may communicate with other by addressing communications to their respective network addresses.

Each device 102 may also have respective configuration and capability information, which the device may store in its data storage. This information may include, without limitation, the device's type, brand, model number, and various supported capabilities of the device. For example, if the device is a camera made by a particular manufacturer, this information may include an identity of its manufacturer, a model number the device, and specifications of capabilities such as ability to turn on off and to switch between different operational states, etc.

In addition, each device 102 may also have respective computing resource availability information, which the device may store in its data storage. This information may include an indication of the availability of one or more computing resources of the device 102. For example, this information may include information relating to the theoretical maximum availability and/or current availability of resources such as processing power, memory, battery life, among various other examples. In some examples, this information may include information relating to resource availability of a ML-based module or of some components thereof.

This information can be provided in various ways and with varying levels of specificity. For example, with respect to processing power, the information can specify information related to capacity, utilization, and/or availability in terms of processor type (e.g., a primary CPU or a GPU), number of cores, processing speed, bandwidth, number of processes, threads, handles, etc. As another example, with respect to memory power, the information can specify information related to capacity, utilization, and/or availability in terms of memory composition and use, memory speed, paged/non-paged pools, etc. As another example, with respect to battery life, the information can specify information related to capacity, utilization, and/or availability in terms of battery life, number of charge cycles, anticipated recharge time, etc. Notably, these are just a few examples. In practice, this information could take many forms and could include any other information that relates to the availability of one or more computing resources of the device 102.

In addition, each device 102 may operate in one or more different states and may thus have respective device operational state information, which the device may store in its data storage. For example, in the case where a camera is capturing and recording video, the camera may be considered to be in a video/recording state. As another example, in the case where a television is receiving and presenting streaming media, the television may be considered to be operating in a streaming state. As another example, in some cases, a device may operate in an idle state, in which the device is not being used for its primary purpose. For example, in the case where a camera is not capturing and recording video, the camera may be considered to be operating in an idle state. Likewise, in the case where a television is not presenting any media, the television may be considered to be operating in an idle state. Notably, these just a few examples of operational states. In practice, devices can be also operate in a variety of other operational states, which could be defined to suit a desired configuration.

The device can indicate these and other types of data or information in various ways and can store this information as extensible markup language (XML) data, as a feature bit string, and/or in another form. In some instances, it may also be possible to determine the various types of information described above of a given device by a lookup keyed to an identifier of the device.

### III. Example Operations

As noted above, in some cases, it may be desirable for one or more devices to offload such ML-based tasks to one or more other devices. However, offloading ML-based tasks to a remote device can be undesirable for various reasons. As an alternative approach, the disclosed techniques provide a LAN system configured in a manner that allows a device on the LAN to intelligently and efficiently offload one or more ML-based tasks to one or more other devices on the LAN. This can have various benefits. For example, this can allow a given ML-task to be offloaded to a device that is better suited to handle the task, this can leverage the resources of existing devices (e.g., devices already in a user's home), thereby limiting the cost involved in using one or more remote devices, and/or this can ensure that certain task related data is retained locally, which may provide security and/or privacy-related benefits, among numerous other advantages.

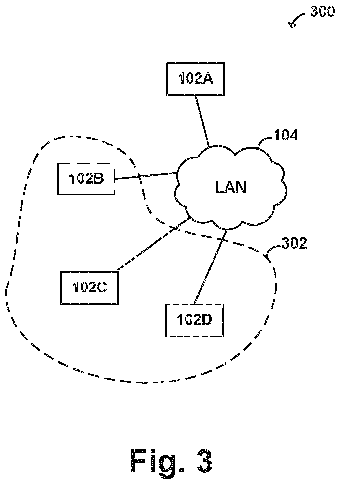

In line with this approach, according to one aspect, the disclosure provides a method for use for use in connection with a LAN system comprising a communication network and a group of multiple devices connected to the communication network. The group of multiple devices can includes a first device and a separate set of devices. Figure 3 provides an example illustration of this. As shown, the LAN system 300 includes a communication network 104 and a group of multiple devices connected to the communication network 104. The group of multiple devices includes a first device 102A and a separate set of devices 302. As shown in this example, the separate set of devices 302 is a set of three devices, and includes a device 102B, a device 102C, and a device 102D. Though in other examples, the separate set of devices could have a different number of devices (including just a single device).

Each of the devices of the LAN system 300 can be of various types, including any of the device types described in this disclosure. Thus, in one example scenario, the first device 102A could be a front door camera, and the devices 102B, 102C, and 102D could be television, a set-top box, and a sound speaker, respectively. But many other examples are possible as well.

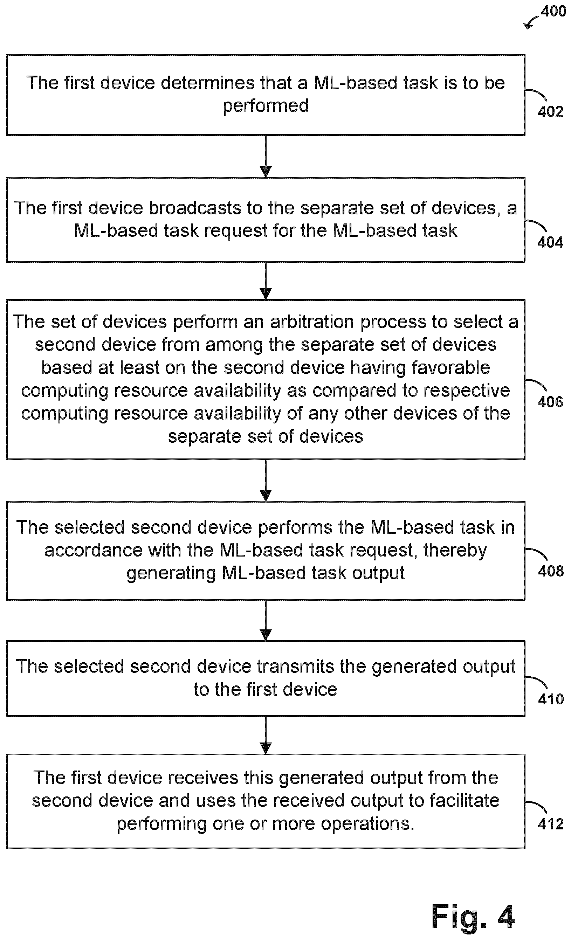

The LAN system 300 and/or components thereof can perform various operations to facilitate the first device 102A offloading ML-based tasks to one or more other devices, such as devices 102B, 102C, and/or 102D. Examples of such operations are discussed in connection with Figures 4-6. These operations and related features will now be described.

Figure 4 is a flow chart illustrating an example method 400 that could be carried out in accordance with the disclosure. To begin, at block 402, the first device 102A determines that a ML-based task is to be performed. The first device 102A can do this in various ways. For example, this can involve the first device 102A receiving an instruction to perform the one or more operations, and the first device determining that the ML-based task needs to be performed to facilitate performing the one or more operations. For example, in the case where the first device 102A is a front door camera, the camera may be configured to operate according to a given set of program instructions, which specify that the device is to periodically check to determine whether a person is present within a field of view of the camera, and to do this, the camera can determine that there is a need to perform the ML-based task of using video data and a trained ML-based image recognition model to generate output indicating the presence of a person in the video.

After the first device 102A determines that a ML-based task is to be performed, at block 404, the first device 102A broadcasts to the separate set of devices 302, a ML-based task request for the ML-based task. The task request can include various types of data and/or metadata associated with the task being requested and/or with the device transmitting the task request. For example, the task request can include the data necessary to perform the task. For example, in the case where the task request is for a ML-based task of using video data and a trained ML-based image recognition model to generate output indicating the presence of a person in the video, the task request can include the video data and instructions on how to use the video data to generate the desired output (e.g., perhaps with an indication of the image recognition model to be run). The task request can also provide information such as estimated computing resource requirements for the ML-based task. For instance, the task request can specify a particular amount of processing power, memory, battery level etc. that is estimated to be needed by the first device 102A to complete this task. As another example, the task request can provide information such as a completion deadline for the ML-based task. This can be expressed in a variety of ways, such as in the form of a specified duration, a completion time point (which can be based on a synchronized clock), etc.

Next, at block 406, the set of devices 302 perform an arbitration process to select a second device 102B from among the separate set of devices 302 based at least on the second device having favorable computing resource availability as compared to respective computing resource availability of any other devices of the set of devices 302. For example, in the case where the devices in the separate second set are a television, a set-top box, and a sound speaker, respectively, the devices could perform an arbitration process to select the television for ML-task offloading purposes.

The set of devices 302 can perform the arbitration process in a variety of ways and can include one or more of the devices in the set of devices 302 performing one or more operations. In one example, this can involve each device in the set of devices 302 determining its own computing resource availability (based on data indicating the same stored in a local data storage) and broadcasting that information to the other devices so that each device can use that collective information to determine which device has the most favorable computing resource availability for the purpose of performing the ML-based task. In some instances, this may involve combining multiple different components of computing resource into a unified computing resource indicator, which can easily be compared for ranking purposes. In another example, a designated device within the set of devices can determine the computing resource availability of each other device in the set, and can use that information to select the second device having the most favorable computing resource availability for the purpose of performing the ML-based task.

In some examples, the selection process can involve a consideration of certain metadata associated with the ML-based task, such as an indication of estimated computing resource requirements and/or a completion deadline for the ML-based task, as this could cause selection of a second device this is particularly suited to handle the ML-based task at issue.

Additionally or alternatively, the second set of devices 302 can consider other information in selecting the second device. For instance, the second set of devices 302 can consider the speed, bandwidth and/or network latency associated with a communication path to or from the given device, or associated with the LAN to which the device is connected. This information can be represented in various ways, such as in the form of a graph where nodes of the graph represent devices on the LAN and edges of the graph represent bandwidth and/or network latency associated with a communication path to or from the given device. In practice, some or all of the devices may be connected to the LAN using a wireless connection and may have associated communication paths with bandwidth or network latency that frequency changes over time and which could potentially be a relevant factor when it comes to selecting a second device for ML-based task offloading purposes.

As another example, the second set of devices 302 can consider whether the second device has a predefined state (e.g., whether the device has an idle state). This can help ensure that devices in certain operational states are favored for purposes of being selected for ML-based task offloading. Thus, in the case where a television or other device is in an idle state, it may be selected (or be more likely to be selected) for offloading purposes.

The devices in the second set of devices 302 can determine the various information identified above and/or can share that information with other devices in various ways. For instance, in connection with a device registration process, a device can determine the various information described above, store that information in a local data storage, and/or transmit that information to one or more other devices on the LAN. In some examples, the devices can periodically and/or routinely repeat some or all of these or related operations, thereby storing and/or transmitting updated information about the device on periodic or routine basis. In this way, at any given time point, the selection of the second device can be made based on recently determined information about the various devices. At block 408, the selected second device performs the ML-based task in accordance with the ML-based task request, thereby generating ML-based task output. In other words, the device receiving the offloaded ML-based task can perform that task. For example, after being selected, the television can perform the ML-based task, namely the task of using video data and a trained ML-based image recognition model to generate output indicating the presence of a person in the video.

At block 410, the selected second device 102B transmits the generated output to the first device 102A. And at block 412, the first device 102A receives this generated output from the second device and uses the received output to facilitate performing one or more operations. Among other things, this can allow the first device 102A to carry out certain desired operations while being able to offload the ML-task to the second device 102B.

For example, this could involve the television transmitting the generated output indicating the presence of a person in the video to the camera, which the camera could receive and use to facilitate performing certain operations, such as generating an alert (e.g., by way of causing a speaker in the home to output a doorbell chime and/or by sending a message to a mobile device).

Notably, in practice, a given ML-based task might have multiple sub tasks, and the same offloading concepts described herein may be applied to one or more of those different subtasks (perhaps with each subtasks being offloaded to a different respective device). Also, in some instances, in connection with a given device performing certain operations, it might be desirable to offload one or more ML-based tasks to a local device, while offloading one or more other ML-based tasks to a remote device (perhaps depending on the complexity of the task at issue, security/privacy-related concerns associated with performing the task locally vs. remotely, etc.). In some situations, a given ML-based task may be offloaded locally first and based on the result, the same or a similar ML-based task might be offloaded on a remove device for more detailed/varied processing, for example.

In some examples, after the first device 102A determines that a ML-based task is to be performed, it could be the case that there are no other devices on the LAN and/or that there are no other devices on the LAN that have appropriate computing resource availability to perform the ML-based task. In this situation, in one example, the first device 102A can determine this (e.g., based on information about the existence and/or details of other devices on the LAN transmitted to the first device 102A by one or more of those devices or from another device on the LAN), and in response, the first device 102A can itself perform the ML-based task, rather than offloading it to another device.

Also, although the above described method and related examples have been discussed in the context of some specific examples, it should be noted that the described operations could be performed in many other contexts, in connection with different types of devices, in different arrangements, with different types of ML-based tasks being offloaded, among other possible variations.

As such, the disclosed techniques can provide for advantages in a variety of different setups and use cases. For example, a battery-powered camera could offload one or more ML-based tasks to a camera hub that has a constant power connection, to help minimize draining the battery of the battery-powered camera. As another example, a light switch or light strip could use a microphone to capture audio data, which the light switch or light strip could provide to another device, in connection with offloading to that other device one or more ML-based tasks that involve using a speech recognition model (e.g., a model configured to detect a keyword/wakeword, to identify a voice, to convert speech to text, and/or to perform any other operations related to speech recognition), the results of which could be used for performing various operations. As another example, in a scenario where a user's home has two televisions, a first television that is in use by a user could capture video data and provide that data to a second television that is in an idle state, in connection with offloading to that second television one or more ML-based tasks that involve using that captured video data. Many other potential use cases are possible as well.

In various examples, the example method and related examples described above in connection with Figure 4 could be framed from the perspective of a specific device, such as the first device. As such, the method could include (i) the first device determining that a ML-based task is to be performed; (ii) the first device broadcasting to the separate set of devices, a ML-based task request for the ML-based task, (a) wherein the separate set of devices are configured to perform an arbitration process to select a second device from among the separate set of devices based at least on the second device having favorable computing resource availability as compared to respective computing resource availability of any other devices of the separate set of devices, and (b) wherein the second device is configured to perform the ML-based task in accordance with the ML-based task request, thereby generating ML-based task output, and to transmit the generated ML-based task output to the first device; and (iii) the first device receiving the generated output from the second device and using the received output to facilitate performing one or more operations.

In some examples, the first device determining that the ML-based task is to be performed comprises the first device receiving an instruction to perform the one or more operations, and the first device determining that the ML-based task needs to be performed to facilitate performing the one or more operations.

In some examples, the ML-based task is a task that involves using audio-based data together with a speech recognition model to generate output, or is a task that involves using image-based data together with an image recognition model. In some examples, the ML-based task is a subtask of another ML-based task.

In some examples, the ML-based task request comprises an indication of estimated computing resource requirements for the ML-based task and/or further comprises an indication of a completion deadline for the ML-based task.

In some examples, the second device having favorable computing resource availability as compared to respective computing resource availability of any other devices of the separate set of devices comprises the second device having favorable processing computing resource availability as compared to respective processing computing resource availability of any other devices of the separate set of devices.

In some examples the second device having favorable computing resource availability as compared to respective computing resource availability of any other devices of the separate set of devices comprises the second device having favorable memory computing resource availability as compared to respective memory computing resource availability of any other devices of the separate set of devices.

In some examples, the second device having favorable computing resource availability as compared to respective computing resource availability of any other devices of the separate set of devices comprises the second device having favorable power computing resource availability as compared to respective power computing resource availability of any other devices of the separate set of devices.

In some examples, the second device having favorable computing resource availability as compared to respective computing resource availability of any other devices of the separate set of devices comprises a ML module of the second device having favorable computing resource availability as compared to respective computing resource availability of ML modules of any other devices of the separate set of devices.

In some examples, the separate set of devices performing the arbitration process to select the second device from among the separate set of devices comprises: each of the devices in the separate set of devices determining respective computing resource availability and broadcasting the determined respective computing resource to the other devices in the separate set of devices.

In some examples, the second device is selected based further on the second device having a predefined state. In some examples, the predefined state is an idle state.

In some examples, the first device is a camera or a light switch, and the second device is a television or a set-top box.

The disclosure also provides for other approaches to intelligently and efficiently offloading one or more ML-based tasks to one or more other devices on the LAN. For example, in another aspect, rather than the second set of devices 302 performing an arbitration process, the first device 102A can determine computing resource availability for each device of the separate set of devices 302, and can then use at least the determined ML-based task and the determined computing resource availability for each device of the separate set of devices 302 as a basis to select the second device 102B from among the separate set of devices 302. The first device 102A can then transmit to the second device 102B, a ML-based task request for the ML-based task, such that the second device can perform the ML-based task and provide output to the first device, which it can use in connection with performing certain operations.

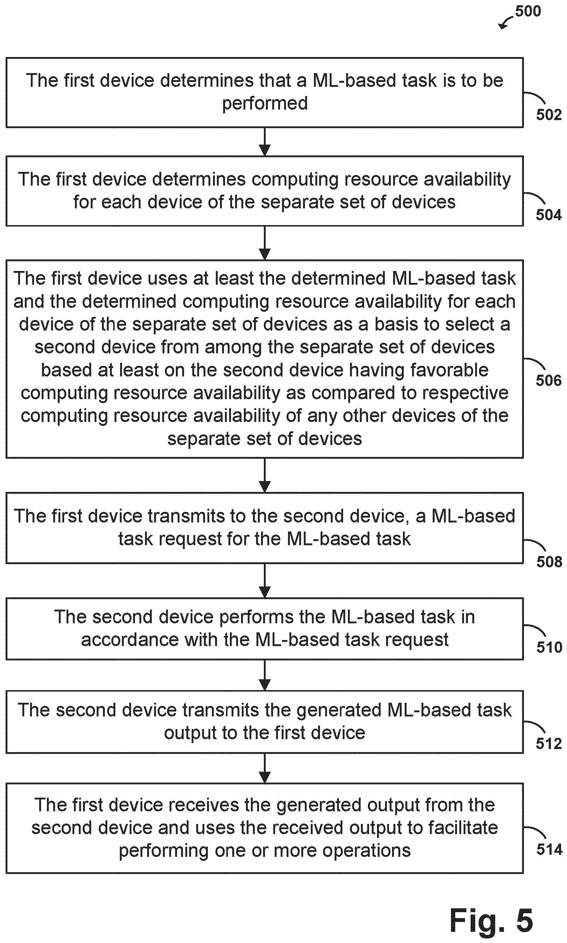

Figure 5 is a flow chart illustrating an example method 500 in line with this alternative approach that could be carried out in accordance with the disclosure. For the sake of brevity, operations previously described are not further described here.

At block 502, the first device 102A determines that a ML-based task is to be performed. At block 504, the first device 102A determines computing resource availability for each device of the separate set of devices 302. In various examples, this could involve using any of the techniques discussed above in connection with sharing such information among the devices.

At block 506, the first device 102A uses at least the determined ML-based task and the determined computing resource availability for each device of the separate set of devices 302 as a basis to select a second device 102B from among the separate set of devices based at least on the second device having favorable computing resource availability as compared to respective computing resource availability of any other devices of the separate set of devices.

At block 508, the first device 102A transmits to the second device 102B, a ML-based task request for the ML-based task. At block 510, the second device 102B performs the ML-based task in accordance with the ML-based task request, thereby generating ML-based task output. At block 512, the second device 102B transmits the generated ML-based task output to the first device 102A. At block 514, the first device 102A receives the generated output from the second device 102B and uses the received output to facilitate performing one or more operations.

As still another approach, a controller (e.g., in the form of a router 114 or other network equipment) connected to the LAN 104 can aid in selecting the second device 102B and can facilitate perform performing certain operations, such as those discussed above. In this way, the controller can provide the described functionality as a network management service.

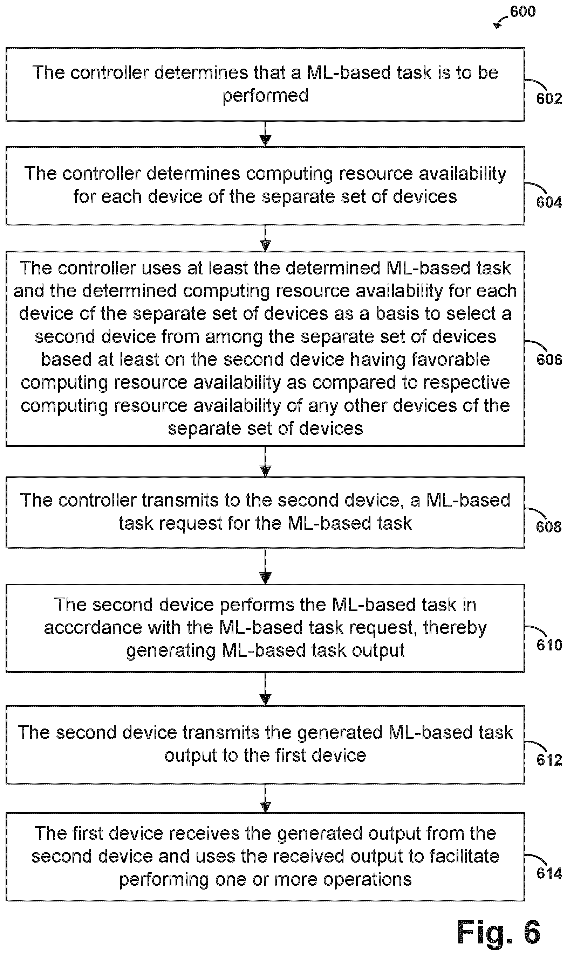

Figure 6 is a flow chart illustrating an example method 600 in line with this alternative approach that could be carried out in accordance with the disclosure.

At block 602, the controller determines that a ML-based task is to be performed. At block 604, the controller determines computing resource availability for each device of the separate set of devices 302.

At block 606, the controller uses at least the determined ML-based task and the determined computing resource availability for each device of the separate set of devices 302 as a basis to select a second device 102B from among the separate set of devices based at least on the second device having favorable computing resource availability as compared to respective computing resource availability of any other devices of the separate set of devices.

At block 608, the controller transmits to the second device 102B, a ML-based task request for the ML-based task. At block 610, the second device 102B performs the ML-based task in accordance with the ML-based task request, thereby generating ML-based task output. At block 612, the second device 102B transmits the generated ML-based task output to the first device 102A. And at block 614, the first device 102A receives the generated output from the second device 102B and uses the received output to facilitate performing one or more operations.

### IV. Example Variations

Although some of the acts and/or functions described in this disclosure have been described as being performed by a particular entity, the acts and/or functions can be performed by any entity, such as those entities described in this disclosure. Further, although the acts and/or functions have been recited in a particular order, the acts and/or functions need not be performed in the order recited. However, in some instances, it can be desired to perform the acts and/or functions in the order recited. Further, each of the acts and/or functions can be performed responsive to one or more of the other acts and/or functions. Also, not all of the acts and/or functions need to be performed to achieve one or more of the benefits provided by this disclosure, and therefore not all of the acts and/or functions are required.

Although certain variations have been discussed in connection with one or more examples of this disclosure, these variations can also be applied to all of the other examples of this disclosure as well.

Although select examples of this disclosure have been described, alterations and permutations of these examples will be apparent to those of ordinary skill in the art. Other changes, substitutions, and/or alterations are also possible without departing from the invention in its broader aspects as set forth in the following claims.

## Claims

1. A method for use in connection with a local area network (LAN) system comprising a communication network and a group of multiple devices connected to the communication network, wherein the group of multiple devices includes a first device and a separate set of devices, the method comprising:
the first device determining that a machine learning (ML)-based task is to be performed;
the first device broadcasting to the separate set of devices, a ML-based task request for the ML-based task, (i) wherein the separate set of devices are configured to perform an arbitration process to select a second device from among the separate set of devices based at least on the second device having favorable computing resource availability as compared to respective computing resource availability of any other devices of the separate set of devices, and (ii) wherein the second device is configured to perform the ML-based task in accordance with the ML-based task request, thereby generating ML-based task output, and to transmit the generated ML-based task output to the first device; and
the first device receiving the generated output from the second device and using the received output to facilitate performing one or more operations.

2. The method of claim 1, wherein the first device determining that the ML-based task is to be performed comprises the first device receiving an instruction to perform the one or more operations, and the first device determining that the ML-based task needs to be performed to facilitate performing the one or more operations.

3. The method of claim 1, wherein the ML-based task is a task that involves using audio-based data together with a speech recognition model to generate output.

4. The method of claim 1, wherein the ML-based task is a task that involves using image-based data together with an image recognition model.

5. The method of claim 1, wherein the ML-based task is a subtask of another ML-based task.

6. The method of claim 1, wherein the ML-based task request comprises an indication of estimated computing resource requirements for the ML-based task.

7. The method of claim 6, wherein the ML-based task request further comprises an indication of a completion deadline for the ML-based task.

8. The method of claim 1, wherein the separate set of devices performing the arbitration process to select the second device from among the separate set of devices comprises:
each of the devices in the separate set of devices determining respective computing resource availability and broadcasting the determined respective computing resource to the other devices in the separate set of devices.

9. The method of claim 1, wherein the second device having favorable computing resource availability as compared to respective computing resource availability of any other devices of the separate set of devices comprises the second device having favorable processing computing resource availability as compared to respective processing computing resource availability of any other devices of the separate set of devices.

10. The method of claim 1, wherein the second device having favorable computing resource availability as compared to respective computing resource availability of any other devices of the separate set of devices comprises the second device having favorable memory computing resource availability as compared to respective memory computing resource availability of any other devices of the separate set of devices.

11. The method of claim 1, wherein the second device having favorable computing resource availability as compared to respective computing resource availability of any other devices of the separate set of devices comprises the second device having favorable power computing resource availability as compared to respective power computing resource availability of any other devices of the separate set of devices.

12. The method of claim 1, wherein the second device having favorable computing resource availability as compared to respective computing resource availability of any other devices of the separate set of devices comprises a ML module of the second device having favorable computing resource availability as compared to respective computing resource availability of ML modules of any other devices of the separate set of devices.

13. The method of claim 1, wherein the second device is selected based further on the second device having a predefined state.

14. A computing system configured to perform a set of acts for use in connection with a local area network (LAN) system comprising a communication network and a group of multiple devices connected to the communication network, wherein the group of multiple devices includes a first device and a separate set of devices, the set of acts comprising:
the first device determining that a machine learning (ML)-based task is to be performed;
the first device broadcasting to the separate set of devices, a ML-based task request for the ML-based task, (i) wherein the separate set of devices are configured to perform an arbitration process to select a second device from among the separate set of devices based at least on the second device having favorable computing resource availability as compared to respective computing resource availability of any other devices of the separate set of devices, and (ii) wherein the second device is configured to perform the ML-based task in accordance with the ML-based task request, thereby generating ML-based task output, and to transmit the generated ML-based task output to the first device; and
the first device receiving the generated output from the second device and using the received output to facilitate performing one or more operations.

15. A non-transitory computer-readable medium having stored thereon program instructions that upon execution by a computing system, cause performance of a set of act for use in connection with a local area network (LAN) system comprising a communication network and a group of multiple devices connected to the communication network, wherein the group of multiple devices includes a first device and a separate set of devices, the set of acts comprising:
the first device determining that a machine learning (ML)-based task is to be performed;
the first device broadcasting to the separate set of devices, a ML-based task request for the ML-based task, (i) wherein the separate set of devices are configured to perform an arbitration process to select a second device from among the separate set of devices based at least on the second device having favorable computing resource availability as compared to respective computing resource availability of any other devices of the separate set of devices, and (ii) wherein the second device is configured to perform the ML-based task in accordance with the ML-based task request, thereby generating ML-based task output, and transmit the generated ML-based task output to the first device; and
the first device receiving the generated output from the second device and using the received output to facilitate performing one or more operations.
